# EUROPÄISCHE PATENTANMELDUNG

(11) **EP 3 239 934 A1**
(43) Veröffentlichungstag der Anmeldung: **01.11.2017**
(21) Anmeldenummer: 16167007.0
(22) Anmeldetag: 26.04.2016
(51) Int. Cl.: G07B 15/02, G07B 15/04

(54) **PARKSÄULE UND VERFAHREN ZUM BETREIBEN EINER PARKSÄULE**

(71) Anmelder: SKIDATA AG, 5083 Grödig/Salzburg (AT)
(72) Erfinder: Fellner, Franz, 83451 Piding (DE)
(74) Vertreter: Karakatsanis, Georgios

(57) **Zusammenfassung**

Es wird eine Parksäule (1) vorgeschlagen, welche ein Modul (2) umfasst, in das zumindest eine Komponente zur Bedienung der Parksäule (1) und/oder zur Interaktion zwischen der Parksäule (1) und einem Fahrzeuginsassen eines an der Parksäule (1) stehenden Fahrzeugs integriert ist, welches bei Erkennung eines an der Parksäule (1) stehenden Fahrzeugs um eine vorgegebene Strecke in Richtung des Fahrzeugs aus der Parksäule (1) mittels eines Antriebsmittels reversibel herausfahrbar ist.

## Beschreibung

Die vorliegende Erfindung bezieht sich auf eine Parksäule gemäß dem Oberbegriff des Patentanspruchs 1. Des Weiteren bezieht sich die Erfindung auf Verfahren zum Betreiben einer Parksäule, insbesondere einer erfindungsgemäßen Parksäule.

Aus dem Stand der Technik ist bekannt, vor Ein- und Ausfahrten von Parkhäusern Parksäulen anzuordnen, wobei Parksäulen, die vor einer Einfahrt angeordnet sind, ein Knopf oder eine Taste aufweisen, mittels dessen bzw. deren Betätigung über eine Ticketausgabe ein Ticket ausgegeben wird, wobei anschließend eine Parkschranke im Öffnungssinne betätigt wird, um einem Fahrzeug Einlass zu gewähren. Bei vor Ausfahrten von Parkhäusern angeordneten Parksäulen ist eine Vorrichtung zur Eingabe von Tickets oder kartenförmigen Zahlungsmitteln, beispielsweise Kreditkarten vorgesehen, wobei nach Eingabe eines Tickets mit gültigen Bezahlinformationen oder eines kartenförmigen Zahlungsmittels und Auslesen der entsprechenden Daten eine Parkschranke im Öffnungssinne betätigt wird, um die Ausfahrt des Fahrzeugs zu ermöglichen.

Die Parksäulen sind fest angeordnet, so dass eine Betätigung der Taste bzw. des Knopfes zur Ausgabe eines Tickets, die Entnahme eines Tickets an einer Einfahrt oder die Eingabe eines Tickets oder eines Zahlungsmittels an einer Ausfahrt seitens des Fahrers aus dem Auto heraus nur dann möglich ist, wenn die der Parksäule zugewandte Seite des Fahrzeugs in Abhängigkeit von der Größe bzw. der Armlänge des Fahrers nahe genug an der Parksäule ist. Dies kann jedoch nicht immer gewährleistet werden, so dass in nachteiliger Weise entweder ein Manövrieren des Fahrzeugs oder ein Aussteigen des Fahrers erforderlich ist, was in Zeitverlust und Staubildung an der Ein- oder Ausfahrt resultieren kann. Zudem kann die Situation auftreten, dass der Fahrer sehr nah an die Parksäule heranfährt, um diese Betätigen zu können, wodurch Schäden an Fahrzeug und Parksäule entstehen können.

Der vorliegenden Erfindung liegt die Aufgabe zugrunde, eine Parksäule anzugeben, durch die die erwähnten Nachteile des Standes der Technik weitgehend vermieden werden. Ferner soll ein Verfahren zum Betreiben einer Parksäule, insbesondere einer erfindungsgemäßen Parksäule angegeben werden.

Diese Aufgabe wird für eine Parksäule durch die Merkmale des Patentanspruchs 1 gelöst. Ein Verfahren zum Betreiben einer Parksäule ist Gegenstand des Patentanspruchs 9. Weitere erfindungsgemäße Ausgestaltungen und Vorteile gehen aus den Unteransprüchen hervor.

Demnach wird eine Parksäule vorgeschlagen, umfassend ein Modul, in das zumindest eine Komponente zur Bedienung der Parksäule und/oder zur Interaktion zwischen der Parksäule und einem Fahrzeuginsassen eines an der Parksäule stehenden Fahrzeugs integriert ist, welches bei Erkennung eines an der Parksäule stehenden Fahrzeugs um eine vorgegebene Strecke in Richtung des stehenden Fahrzeugs aus der Parksäule mittels eines Antriebsmittels reversibel herausfahrbar ist.

Das Antriebsmittel kann als Elektromotor ausgeführt sein. Alternativ kann das Modul zum Heraus- und Hereinfahren hydraulisch, pneumatisch oder elektromagnetisch antreibbar sein bzw. das Antriebsmittel kann als hydraulisches, pneumatisches oder elektromagnetisches Antriebsmittel nach dem Stand der Technik ausgeführt sein.

Für den Fall, dass das Antriebsmittel als Elektromotor ausgeführt ist, kann das herausfahrbare Modul beispielsweise mittels eines vom Elektromotor antreibbaren Zahnstangenantriebs bewegt werden. Ferner kann dem Elektromotor ein Getriebe nachgeschaltet sein, beispielsweise ein Schneckengetriebe, ein Riemengetriebe oder ein Stirnradgetriebe.

Gemäß einer Ausgestaltung der Erfindung sind bei einer an einer Einfahrt angeordneten Parksäule in das herausfahrbare Modul ein Knopf bzw. eine Taste zur Aktivierung der Ticketausgabe und die Ticketausgabe integriert, wobei bei einer an einer Ausfahrt angeordneten Parksäule in das herausfahrbare Modul eine Vorrichtung zur Eingabe eines Tickets oder eines kartenförmigen Zahlungsmittels integriert ist.

Im Rahmen einer weiteren Ausgestaltung sind bei einer an einer Ausfahrt angeordneten Parksäule in das herausfahrbare Modul ein Knopf bzw. eine Taste zur Aktivierung der Ticketausgabe und die Ticketausgabe integriert, wobei die Ticketausgabe als Vorrichtung zur Eingabe eines Tickets oder eines kartenförmigen Zahlungsmittels dient und der Knopf bzw. die Taste zur Aktivierung der Ticketausgabe in diesem Fall deaktiviert ist. Auf diese Weise können die herausfahrbaren Module der an Ein- und Ausfahrten angeordneten Parksäulen gleich ausgeführt sein.

Ferner kann in das herausfahrbare Modul ein Touch-Screen zur Bedienung der Parksäule integriert sein. Gemäß einer weiteren Ausgestaltung der Erfindung kann in das herausfahrbare Modul eine Barcode-Leseeinrichtung für Zugangsberechtigungen integriert sein.

Auf diese Weise wird gewährleistet, dass ein Fahrer eines an der Parksäule stehenden Fahrzeugs die Parksäule betätigen kann, ohne sehr nah heranfahren zu müssen und auch dann, wenn die der Parksäule zugewandte Seite des Fahrzeugs in Abhängigkeit von der Größe bzw. der Armlänge des Fahrers nicht nahe genug an der Parksäule ist, um die Parksäule ohne ein Herausfahren des Moduls bedienen zu können.

Die vorgegebene Strecke ist so bemessen, dass eine Beschädigung der Fahrzeuge ausgeschlossen ist. Beispielsweise kann die Strecke 5 cm betragen.

Bei Parksäulen, welche eine Leseeinrichtung zum berührungslosen Auslesen von Zugangsberechtigungen, umfassend eine Antenne aufweisen, kann im Rahmen einer weiteren Ausgestaltung die Antenne in das herausfahrbare Modul integriert sein, um somit etwaige Reichweitenprobleme zu lösen. Derartige Parksäulen können an Einfahrten oder Ausfahrten angeordnet sein, um beispielsweise wiederkehrenden Kunden, die über berührungslos auslesbare Zugangsberechtigungen verfügen, einen erhöhten Komfort bieten zu können.

Im Rahmen einer weiteren Ausgestaltung der Erfindung ist die den Fahrzeugen zugewandte Seite des herausfahrbaren Moduls an den Rändern mit einer Schicht aus elastischem Material versehen, so dass eine Beschädigung eines Fahrzeugs, beispielsweise eines Außenspiegels vermieden wird.

Des Weiteren kann gemäß der Erfindung vorgesehen sein, dass wenn beim Herausfahren des Moduls vor Erreichen der Endposition die Bewegung des Moduls aufgrund eines Widerstandes nicht fortgesetzt werden kann, das Herausfahren abgebrochen wird und das Modul in die Ausgangsposition oder um ein vorgegebenes Maß hereingefahren wird. Auf diese Weise wird erkannt, ob das Modul an ein Fahrzeug zum Anliegen gekommen ist. Die Erkennung eines Widerstandes kann beispielsweise dadurch erfolgen, dass für den Fall, dass das Antriebsmittel als Elektromotor ausgeführt ist, die Stromaufnahme des Elektromotors kontinuierlich erfasst wird, wobei, wenn die Stromaufnahme einen Schwellenwert überschreitet, ein Anliegen erkannt wird. Ferner unabhängig von der Ausgestaltung des Antriebsmittels kann die beim Herausfahren des Moduls zurückgelegte Strecke erfasst werden, wobei, wenn das Modul nicht um die vorgegebene Strecke in Richtung des stehenden Fahrzeugs herausgefahren werden kann, ein Anliegen erkannt wird.

Die Funktionsweise der Parksäule ist wie folgt: Zunächst wird erkannt, ob ein Fahrzeug an der Parksäule steht, wobei dies vorzugsweise über zumindest eine Induktionsschleife in der Einfahrt bzw. Ausfahrt erfolgt, wobei alternativ oder zusätzlich zumindest ein Näherungssensor vorgesehen sein kann.

Nach Erkennung eines Fahrzeugs wird das Modul unmittelbar oder nach einer vorgegebenen Zeitspanne herausgefahren, um eine komfortable Bedienung der Parksäule und/oder eine Interaktion zwischen der Parksäule und einem Fahrzeuginsassen des an der Parksäule stehenden Fahrzeugs zu ermöglichen. Wenn das Modul nach einer vorgegebenen Zeitspanne nach Erkennung eines Fahrzeugs herausgefahren wird, wird abgewartet, ob in dieser Zeitspanne eine Bedienung erfolgt. Ist dies nicht der Fall, so wird das Modul herausgefahren, um eine komfortable Bedienung der Parksäule und/oder eine Interaktion zwischen der Parksäule und einem Fahrzeuginsassen des an der Parksäule stehenden Fahrzeugs zu ermöglichen.

Im Rahmen einer weiteren Ausgestaltung der Erfindung weist die Parksäule eine Kamera auf, deren Bilder in einer in der Parksäule angeordneten Auswerteeinheit oder in einem Server, welcher mit der Parksäule zur Datenkommunikation verbunden ist, ausgewertet werden, wobei, wenn vorgegebene Bewegungsmuster bzw. Gesten einer Hand eines Fahrzeuginsassen eines an der Parksäule stehenden Fahrzeugs erkannt werden, das Modul herausgefahren wird. Wenn beispielsweise ein Winken erkannt wird, wird das Modul herausgefahren. Ferner kann mittels der Kamera erkannt werden, ob der Arm eines Fahrzeuginsassen eines an der Parksäule stehenden Fahrzeugs in Richtung des Moduls ausgestreckt ist und seine Hand das Modul nicht erreicht; in diesem Fall wird das Modul herausgefahren. Dies kann auch durchgeführt werden, wenn in der Regel das Modul nach einer vorgegebenen Zeitspanne herausgefahren wird und vor Ablauf der vorgegebenen Zeitspanne ein vorgegebenes Bewegungsmuster erkannt wird.

Für den Fall einer an einer Einfahrt angeordneten Parksäule, bei der in das herausfahrbare Modul der Knopf bzw. die Taste zur Aktivierung einer Ticketausgabe und die Ticketausgabe integriert sind, wird vor dem Herausfahren des Moduls ein Ticket mittels einer in der Parksäule angeordneten Codiereinrichtung codiert und an die in das Modul integrierte Ticketausgabe übergeben, so dass nach Betätigung des Knopfes oder der Taste zur Ausgabe des Tickets dieses sofort ausgegeben werden kann, wobei, wenn das Ticket entnommen worden ist, das Modul hereingefahren wird.

Alternativ wird für den Fall einer an einer Einfahrt angeordneten Parksäule, bei der in das herausfahrbare Modul der Knopf bzw. die Taste zur Aktivierung einer Ticketausgabe und die Ticketausgabe integriert sind, nach Betätigung des Knopfes bzw. der Taste das Modul hereingefahren, wobei ein Ticket mittels einer in der Parksäule angeordneten Codiereinrichtung codiert und an die Ticketausgabe übergeben wird und anschließend das Modul herausgefahren wird, um das Ticket auszugeben, wobei, wenn das Ticket entnommen worden ist, das Modul hereingefahren wird.

Für den Fall einer an einer Ausfahrt angeordneten erfindungsgemäßen Parksäule, bei der in das herausfahrbare Modul eine Vorrichtung zur Eingabe eines Tickets oder eines kartenförmigen Zahlungsmittels angeordnet ist, wird bei Erkennung eines Fahrzeugs das Modul herausgefahren, wobei nach der Eingabe eines Tickets oder eines Zahlungsmittels das Modul hereingefahren wird, um das Ticket bzw. das Zahlungsmittel an eine in der Parksäule angeordneten Auswerteeinheit zu übergeben, wobei nach erfolgter Auswertung das Ticket bzw. das Zahlungsmittel von der Auswerteeinheit an die Vorrichtung zur Eingabe eines Tickets oder eines kartenförmigen Zahlungsmittels übergeben wird und das Modul herausgefahren wird, um das Ticket bzw. das Zahlungsmittel herauszugeben, wobei wenn das Ticket bzw. das Zahlungsmittel entnommen worden ist, das Modul hereingefahren wird.

Gemäß einer Weiterbildung der Erfindung ist vorgesehen, dass, wenn bei herausgefahrenem Modul nach einer vorgegebenen Zeitdauer keine Bedienung der Parksäule und/oder keine Interaktion zwischen der Parksäule und einem Fahrzeuginsassen des an der Parksäule stehenden Fahrzeugs detektiert wird, z.B. wenn der Knopf bzw. die Taste zur Aktivierung einer Ticketausgabe nicht betätigt wird oder wenn ein Ticket nicht entnommen wird, das Modul hereingefahren wird.

Zur Übergabe der Tickets zwischen der in der Parksäule angeordneten Codiereinrichtung und der Ticketausgabe und zur Übergabe eines Tickets oder eines Zahlungsmittels von der Vorrichtung zur Eingabe eines Tickets oder eines kartenförmigen Zahlungsmittels an eine in der Parksäule angeordnete Auswerteeinheit und umgekehrt, sind Walzen vorgesehen, um die Übergabe zu gewährleisten.

In das herausfahrbare Modul können auch weitere Komponenten, beispielsweise ein Notknopf und/oder ein Mikrofon zur Kommunikation mit Personal des Betreibers des Parkhauses integriert sein. Ferner kann gemäß weiteren Ausgestaltungen zumindest ein weiteres herausfahrbares Modul vorgesehen sein.

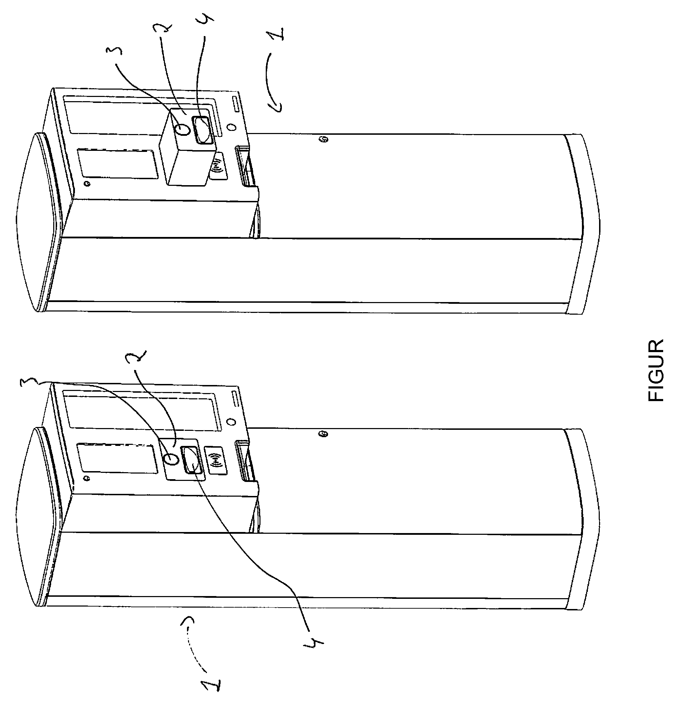

Die Erfindung wird anhand der beigefügten Figur beispielhaft näher erläutert. Im linken Teil der Figur ist eine erfindungsgemäße Parksäule 1 dargestellt, die ein herausfahrbares Modul 2 aufweist, in das eine Taste 3 zur Aktivierung einer Ticketausgabe 4 und die Ticketausgabe 4 integriert sind, wobei das Modul 2 hereingefahren ist. Nach Erkennung eines an der Parksäule 1 stehenden Fahrzeugs wird das Modul 2 mittels eines Antriebsmittels um eine vorgegebene Strecke in Richtung des Fahrzeugs aus der Parksäule 1 herausgefahren, um eine komfortable Bedienung der Parksäule zu ermöglichen, wie anhand des rechten Teils der beigefügten Figur veranschaulicht.

## Patentansprüche

1. Parksäule (1), **dadurch gekennzeichnet, dass** sie ein Modul (2) umfasst, in das zumindest eine Komponente zur Bedienung der Parksäule (1) und/oder zur Interaktion zwischen der Parksäule (1) und einem Fahrzeuginsassen eines an der Parksäule (1) stehenden Fahrzeugs integriert ist, welches bei Erkennung eines an der Parksäule (1) stehenden Fahrzeugs um eine vorgegebene Strecke in Richtung des Fahrzeugs aus der Parksäule (1) mittels eines Antriebsmittels reversibel herausfahrbar ist.

2. Parksäule (1) nach Anspruch 1, **dadurch gekennzeichnet, dass** das Antriebsmittel ein Elektromotor ist oder dass das Antriebsmittel ein hydraulisches, pneumatisches oder elektromagnetisches Antriebsmittel ist.

3. Parksäule (1) nach Anspruch 1 oder 2, **dadurch gekennzeichnet, dass** bei einer an einer Einfahrt angeordneten Parksäule (1) in das herausfahrbare Modul (2) ein Knopf bzw. eine Taste (3) zur Aktivierung einer Ticketausgabe (4) und die Ticketausgabe (4) integriert sind, wobei bei einer an einer Ausfahrt angeordneten Parksäule (1) in das herausfahrbare Modul eine Vorrichtung zur Eingabe eines Tickets oder eines kartenförmigen Zahlungsmittels integriert sind oder wobei bei einer an einer Ausfahrt angeordneten Parksäule (1) in das herausfahrbare Modul (2) ein Knopf bzw. eine Taste (3) zur Aktivierung der Ticketausgabe und die Ticketausgabe (4) integriert sind, wobei die Ticketausgabe (4) als Vorrichtung zur Eingabe eines Tickets oder eines kartenförmigen Zahlungsmittels dient und der Knopf bzw. die Taste zur Aktivierung der Ticketausgabe deaktiviert ist.

4. Parksäule (1) nach Anspruch 3, **dadurch gekennzeichnet, dass** zur Übergabe von Tickets zwischen einer in der Parksäule (1) angeordneten Codiereinrichtung und der Ticketausgabe (4) und zur Übergabe eines Tickets oder eines Zahlungsmittels von der Vorrichtung zur Eingabe eines Tickets oder eines kartenförmigen Zahlungsmittels an eine in der Parksäule (1) angeordnete Auswerteeinheit und umgekehrt Walzen vorgesehen sind.

5. Parksäule (1) nach Anspruch 1, 2, 3 oder 4, **dadurch gekennzeichnet, dass** in das herausfahrbare Modul (2) ein Touch-Screen zur Bedienung der Parksäule und/oder ein Mikrofon integriert ist.

6. Parksäule (1) nach Anspruch 1, 2, 3, 4 oder 5, **dadurch gekennzeichnet, dass** die den an der Parksäule (1) stehenden Fahrzeugen zugewandte Seite des herausfahrbaren Moduls (2) an den Rändern mit einer Schicht aus elastischem Material versehen ist.

7. Parksäule (1) nach Anspruch 1, 2, 3, 4, 5 oder 6, **dadurch gekennzeichnet, dass** das Antriebsmittel als Elektromotor ausgeführt ist, wobei die Stromaufnahme des Elektromotors kontinuierlich erfassbar ist und wobei bei Überschreiten eines Schwellenwertes beim Herausfahren des Moduls (2) vor Erreichen der Endposition ein Anliegen des Moduls (2) an ein Fahrzeug erkannt wird und das Modul (2) ganz oder um ein vorgegebenes Maß hereingefahren wird.

8. Parksäule (1) nach einem der vorangehenden Ansprüche, **dadurch gekennzeichnet, dass** sie eine Kamera aufweist, deren Bilder in einer in der Parksäule oder in einem Server angeordneten Auswerteeinheit ausgewertet werden, wobei, wenn vorgegebene Bewegungsmuster einer Hand eines Fahrzeuginsassen eines an der Parksäule (1) stehenden Fahrzeugs erkannt werden oder wenn erkannt wird, dass der Arm eines Fahrzeuginsassen eines an der Parksäule (1) stehenden Fahrzeugs in Richtung des Moduls (2) ausgestreckt ist und seine Hand das Modul (2) nicht erreicht, das Modul (2) herausgefahren wird.

9. Verfahren zum Betreiben einer Parksäule (1), insbesondere einer Parksäule (1) nach Anspruch 1, 2, 3, 4, 5, 6, 7 oder 8, **dadurch gekennzeichnet, dass** erkannt wird, ob ein Fahrzeug an der Parksäule (1) steht, wobei nach Erkennung eines Fahrzeugs ein Modul (2), in das zumindest eine Komponente zur Bedienung der Parksäule und/oder zur Interaktion zwischen der Parksäule und einem Fahrzeuginsassen eines an der Parksäule (1) stehenden Fahrzeugs integriert ist, um eine vorgegebene Strecke in Richtung des Fahrzeugs aus der Parksäule (1) mittels eines Antriebsmittels herausgefahren wird, um eine komfortable Bedienung der Parksäule (1) und/oder eine Interaktion zwischen der Parksäule (1) und einem Fahrzeuginsassen des an der Parksäule (1) stehenden Fahrzeugs zu ermöglichen.

10. Verfahren zum Betreiben einer Parksäule (1) nach Anspruch 9, **dadurch gekennzeichnet, dass** das Modul (2) unmittelbar nach Erkennung eines Fahrzeugs herausgefahren wird oder dass das Modul (2) nach einer vorgegebenen Zeitspanne herausgefahren wird oder dass das Modul (2) herausgefahren wird, wenn mittels einer Kamera und einer in der Parksäule (1) oder in einem Server angeordneten Auswerteeinheit vorgegebene Bewegungsmuster einer Hand eines Fahrzeuginsassen eines an der Parksäule (1) stehenden Fahrzeugs erkannt werden oder wenn erkannt wird, dass der Arm eines Fahrzeuginsassen eines an der Parksäule (1) stehenden Fahrzeugs in Richtung des Moduls (2) ausgestreckt ist und seine Hand das Modul (2) nicht erreicht, das Modul (2) herausgefahren wird.

11. Verfahren zum Betreiben einer Parksäule (1) nach Anspruch 10, **dadurch gekennzeichnet, dass** ein an der Parksäule (1) stehendes Fahrzeug mittels zumindest einer Induktionsschleife und/oder zumindest eines Näherungssensors erkannt wird.

12. Verfahren zum Betreiben einer Parksäule (1) nach Anspruch 10 oder 11, **dadurch gekennzeichnet, dass** für den Fall einer an einer Einfahrt angeordneten Parksäule (1), bei der in das herausfahrbare Modul der Knopf bzw. die Taste (3) zur Aktivierung einer Ticketausgabe (4) und die Ticketausgabe (4) integriert sind, vor dem Herausfahren des Moduls (2) ein Ticket mittels einer in der Parksäule (1) angeordneten Codiereinrichtung codiert wird und an die Ticketausgabe (4) übergeben wird, so dass nach Betätigung des Knopfes oder der Taste (3) zur Ausgabe des Tickets dieses sofort ausgegeben werden kann, wobei, wenn das Ticket entnommen worden ist, das Modul (2) hereingefahren wird.

13. Verfahren zum Betreiben einer Parksäule (1) nach Anspruch 10 oder 11, **dadurch gekennzeichnet, dass** für den Fall einer an einer Einfahrt angeordneten Parksäule, bei der in das herausfahrbare Modul der Knopf bzw. die Taste zur Aktivierung einer Ticketausgabe und die Ticketausgabe integriert sind, nach Betätigung des Knopfes bzw. der Taste das Modul hereingefahren wird, wobei ein Ticket mittels einer in der Parksäule angeordneten Codiereinrichtung codiert und an die Ticketausgabe übergeben wird und anschließend das Modul herausgefahren wird, um das Ticket auszugeben, wobei, wenn das Ticket entnommen worden ist, das Modul hereingefahren wird.

14. Verfahren zum Betreiben einer Parksäule (1) nach Anspruch 10 oder 11, **dadurch gekennzeichnet, dass** für den Fall einer an einer Ausfahrt angeordneten Parksäule (1), bei der in das herausfahrbare Modul (2) eine Vorrichtung zur Eingabe eines Tickets oder eines kartenförmigen Zahlungsmittels integriert ist, bei Erkennung eines Fahrzeugs das Modul (2) herausgefahren wird, wobei nach der Eingabe eines Tickets oder eines Zahlungsmittels das Modul (2) hereingefahren wird, um das Ticket bzw. das Zahlungsmittel an eine Auswerteeinheit zu übergeben, wobei nach erfolgter Auswertung das Modul (2) herausgefahren wird, um das Ticket bzw. das Zahlungsmittel herauszugeben, wobei wenn das Ticket bzw. das Zahlungsmittel entnommen worden ist, das Modul (2) hereingefahren wird.

15. Verfahren zum Betreiben einer Parksäule (1) nach einem der Ansprüche 10 bis 14, **dadurch gekennzeichnet, dass** wenn bei herausgefahrenem Modul (2) nach einer vorgegebenen Zeitdauer keine Bedienung der Parksäule (1) und/oder keine Interaktion zwischen der Parksäule (1) und einem Fahrzeuginsassen des an der Parksäule (1) stehenden Fahrzeugs detektiert wird oder wenn kein an der Parksäule (1) stehendes Fahrzeugs erkannt wird, das Modul (2) hereingefahren wird.

## Geänderte Patentansprüche

### Geänderte Patentansprüche gemäss Regel 137(2) EPÜ.

1. Parksäule (1), umfassend ein Modul (2), in das zumindest eine Komponente zur Bedienung der Parksäule (1) und/oder zur Interaktion zwischen der Parksäule (1) und einem Fahrzeuginsassen eines an der Parksäule (1) stehenden Fahrzeugs integriert ist, welches bei Erkennung eines an der Parksäule (1) stehenden Fahrzeugs um eine vorgegebene Strecke in Richtung des Fahrzeugs aus der Parksäule (1) mittels eines Antriebsmittels reversibel herausfahrbar ist, wobei bei einer an einer Einfahrt angeordneten Parksäule (1) in das herausfahrbare Modul (2) ein Knopf bzw. eine Taste (3) zur Aktivierung einer Ticketausgabe (4) und die Ticketausgabe (4) integriert sind, **dadurch gekennzeichnet, dass** bei einer an einer Ausfahrt angeordneten Parksäule (1) in das herausfahrbare Modul (2) ein Knopf bzw. eine Taste (3) zur Aktivierung der Ticketausgabe und die Ticketausgabe (4) integriert sind, wobei die Ticketausgabe (4) als Vorrichtung zur Eingabe eines Tickets oder eines kartenförmigen Zahlungsmittels dient und der Knopf bzw. die Taste zur Aktivierung der Ticketausgabe deaktiviert ist oder dass bei einer an einer Ausfahrt angeordneten Parksäule (1) in das herausfahrbare Modul eine Vorrichtung zur Eingabe eines Tickets oder eines kartenförmigen Zahlungsmittels integriert sind, wobei die Parksäule (1) eine Kamera aufweist, deren Bilder in einer in der Parksäule oder in einem Server angeordneten Auswerteeinheit ausgewertet werden, wobei, wenn vorgegebene Bewegungsmuster einer Hand eines Fahrzeuginsassen eines an der Parksäule (1) stehenden Fahrzeugs erkannt werden oder wenn erkannt wird, dass der Arm eines Fahrzeuginsassen eines an der Parksäule (1) stehenden Fahrzeugs in Richtung des Moduls (2) ausgestreckt ist und seine Hand das Modul (2) nicht erreicht, das Modul (2) herausgefahren wird.

2. Parksäule (1) nach Anspruch 1, **dadurch gekennzeichnet, dass** das Antriebsmittel ein Elektromotor ist oder dass das Antriebsmittel ein hydraulisches, pneumatisches oder elektromagnetisches Antriebsmittel ist.

3. Parksäule (1) nach Anspruch 1, **dadurch gekennzeichnet, dass** zur Übergabe von Tickets zwischen einer in der Parksäule (1) angeordneten Codiereinrichtung und der Ticketausgabe (4) und zur Übergabe eines Tickets oder eines Zahlungsmittels von der Vorrichtung zur Eingabe eines Tickets oder eines kartenförmigen Zahlungsmittels an eine in der Parksäule (1) angeordnete Auswerteeinheit und umgekehrt Walzen vorgesehen sind.

4. Parksäule (1) nach Anspruch 1, 2oder 3, **dadurch gekennzeichnet, dass** in das herausfahrbare Modul (2) ein Touch-Screen zur Bedienung der Parksäule und/oder ein Mikrofon integriert ist.

5. Parksäule (1) nach Anspruch 1, 2, 3 oder 4, **dadurch gekennzeichnet, dass** die den an der Parksäule (1) stehenden Fahrzeugen zugewandte Seite des herausfahrbaren Moduls (2) an den Rändern mit einer Schicht aus elastischem Material versehen ist.

6. Parksäule (1) nach Anspruch 1, 2, 3, 4oder 5, **dadurch gekennzeichnet, dass** das Antriebsmittel als Elektromotor ausgeführt ist, wobei die Stromaufnahme des Elektromotors kontinuierlich erfassbar ist und wobei bei Überschreiten eines Schwellenwertes beim Herausfahren des Moduls (2) vor Erreichen der Endposition ein Anliegen des Moduls (2) an ein Fahrzeug erkannt wird und das Modul (2) ganz oder um ein vorgegebenes Maß hereingefahren wird.

7. Verfahren zum Betreiben einer Parksäule (1), insbesondere einer Parksäule (1) nach Anspruch 1, 2, 3, 4, 5 oder 6, wobei erkannt wird, ob ein Fahrzeug an der Parksäule (1) steht, wobei nach Erkennung eines Fahrzeugs ein Modul (2), in das zumindest eine Komponente zur Bedienung der Parksäule und/oder zur Interaktion zwischen der Parksäule und einem Fahrzeuginsassen eines an der Parksäule (1) stehenden Fahrzeugs integriert ist, um eine vorgegebene Strecke in Richtung des Fahrzeugs aus der Parksäule (1) mittels eines Antriebsmittels herausgefahren wird, um eine komfortable Bedienung der Parksäule (1) und/oder eine Interaktion zwischen der Parksäule (1) und einem Fahrzeuginsassen des an der Parksäule (1) stehenden Fahrzeugs zu ermöglichen, **dadurch gekennzeichnet, dass** das Modul (2) herausgefahren wird, wenn mittels einer Kamera und einer in der Parksäule (1) oder in einem Server angeordneten Auswerteeinheit vorgegebene Bewegungsmuster einer Hand eines Fahrzeuginsassen eines an der Parksäule (1) stehenden Fahrzeugs erkannt werden oder wenn erkannt wird, dass der Arm eines Fahrzeuginsassen eines an der Parksäule (1) stehenden Fahrzeugs in Richtung des Moduls (2) ausgestreckt ist und seine Hand das Modul (2) nicht erreicht, das Modul (2) herausgefahren wird.

8. Verfahren zum Betreiben einer Parksäule (1) nach Anspruch 7, **dadurch gekennzeichnet, dass** ein an der Parksäule (1) stehendes Fahrzeug mittels zumindest einer Induktionsschleife und/oder zumindest eines Näherungssensors erkannt wird.

9. Verfahren zum Betreiben einer Parksäule (1) nach Anspruch 7 oder 8, **dadurch gekennzeichnet, dass** für den Fall einer an einer Einfahrt angeordneten Parksäule (1), bei der in das herausfahrbare Modul der Knopf bzw. die Taste (3) zur Aktivierung einer Ticketausgabe (4) und die Ticketausgabe (4) integriert sind, vor dem Herausfahren des Moduls (2) ein Ticket mittels einer in der Parksäule (1) angeordneten Codiereinrichtung codiert wird und an die Ticketausgabe (4) übergeben wird, so dass nach Betätigung des Knopfes oder der Taste (3) zur Ausgabe des Tickets dieses sofort ausgegeben werden kann, wobei, wenn das Ticket entnommen worden ist, das Modul (2) hereingefahren wird.

10. Verfahren zum Betreiben einer Parksäule (1) nach Anspruch 7 oder 8, **dadurch gekennzeichnet, dass** für den Fall einer an einer Einfahrt angeordneten Parksäule, bei der in das herausfahrbare Modul der Knopf bzw. die Taste zur Aktivierung einer Ticketausgabe und die Ticketausgabe integriert sind, nach Betätigung des Knopfes bzw. der Taste das Modul hereingefahren wird, wobei ein Ticket mittels einer in der Parksäule angeordneten Codiereinrichtung codiert und an die Ticketausgabe übergeben wird und anschließend das Modul herausgefahren wird, um das Ticket auszugeben, wobei, wenn das Ticket entnommen worden ist, das Modul hereingefahren wird.

11. Verfahren zum Betreiben einer Parksäule (1) nach Anspruch 7 oder 8, **dadurch gekennzeichnet, dass** für den Fall einer an einer Ausfahrt angeordneten Parksäule (1), bei der in das herausfahrbare Modul (2) eine Vorrichtung zur Eingabe eines Tickets oder eines kartenförmigen Zahlungsmittels integriert ist, bei Erkennung eines Fahrzeugs das Modul (2) herausgefahren wird, wobei nach der Eingabe eines Tickets oder eines Zahlungsmittels das Modul (2) hereingefahren wird, um das Ticket bzw. das Zahlungsmittel an eine Auswerteeinheit zu übergeben, wobei nach erfolgter Auswertung das Modul (2) herausgefahren wird, um das Ticket bzw. das Zahlungsmittel herauszugeben, wobei wenn das Ticket bzw. das Zahlungsmittel entnommen worden ist, das Modul (2) hereingefahren wird.

12. Verfahren zum Betreiben einer Parksäule (1) nach einem der Ansprüche 7 bis 11, **dadurch gekennzeichnet, dass** wenn bei herausgefahrenem Modul (2) nach einer vorgegebenen Zeitdauer keine Bedienung der Parksäule (1) und/oder keine Interaktion zwischen der Parksäule (1) und einem Fahrzeuginsassen des an der Parksäule (1) stehenden Fahrzeugs detektiert wird oder wenn kein an der Parksäule (1) stehendes Fahrzeugs erkannt wird, das Modul (2) hereingefahren wird.
